# EUROPEAN PATENT APPLICATION

(11) **EP 2 921 286 A1**
(43) Date of publication of application: **23.09.2015**
(21) Application number: 15159901.6
(22) Date of filing: 19.03.2015
(51) Int. Cl.: B29C 67/00, B22F 3/105, B33Y 30/00

(54) **ADDITIVE MANUFACTURING MACHINE**

(30) Priority: 20.03.2014 JP 2014058675
(71) Applicant: JEOL Ltd., Akishima, Tokyo 196 (JP)
(72) Inventor: Honda, Kazuhiro, Akishima, Tokyo 196-8558 (JP)
(74) Representative: Boult Wade Tennant

(57) **Abstract**

An additive manufacturing machine is offered which can stably supply a powdered material onto a support stage and can suppress contamination of the interior of a processing chamber with the powdered material. The additive manufacturing machine (1) has the support stage (4) and a powder supply unit (7). The supply unit (7) has powder cartridges (21) and holding mechanisms (22) by which the cartridges (21) are detachably held. Each cartridge (21) has a cartridge body (26) for receiving an amount of powdered material (M1) to be spread tightly as one or plural layers on the stage (4) and an exhaust port (26a) through which the powdered material (M1) received in the cartridge body (26) is discharged.

## Description

### BACKGROUND OF THE INVENTION

### 1. Field of the Invention

The present invention relates to an additive manufacturing machine for fabricating a three-dimensional object by spreading a powdered material on a support stage to form a thin layer of the powdered material and stacking such layers on top of each other one by one.

### 2. Description of the Related Art

In recent years, techniques for fabricating a three-dimensional (3D) object by spreading a powdered material to form a thin layer and stacking such layers on top of each other one by one have attracted lots of attention, and many kinds of additive manufacturing techniques have been developed using different powdered materials and different additive manufacturing procedures.

A related art method of fabricating a three-dimensional (3D) object stereolithographically consists of spreading a powdered material tightly on the top surface of a powder stage to form a layer, creating such layers, melting only a two-dimensional structure portion corresponding to one slice of the 3D object formed by the powdered material spread on the stage by a melting mechanism producing an electron beam or laser light, and stacking such layers on top of each other one by one in the direction of height (Z-direction).

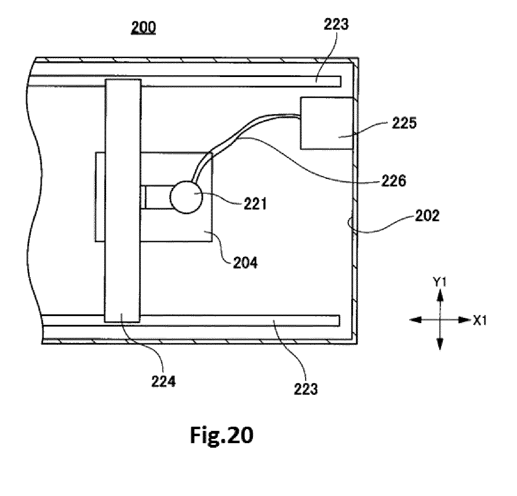

One conventional additive manufacturing machine is next described by referring to FIG. 20, which schematically shows the configuration of the additive manufacturing machine. As shown in FIG. 20, the additive manufacturing (SL or SLA) machine, 200, has a hollow processing chamber 202 for performing a stereolithographic process, a support stage 204 disposed inside the processing chamber 202, and a dispensing head 221 for dispensing a powdered material onto the top surface of the stage 204. Furthermore, the SL machine 200 has a powder reservoir 225 for storing a powdered material, a transport pipe 226 for placing the reservoir 225 and the dispensing head 221 in communication with each other, and a powder transport mechanism (not shown) for transporting the powdered material from the powder reservoir 225 to the dispensing head 221 via the transport pipe 226. The dispensing head 221 is supported by first guide portions 223 and a second guide portion 224 so as to be movable in a direction parallel to one surface of the stage 204.

Powder is transported from the powder reservoir 225 to the dispensing head 221 via the transport pipe 226 by the powder transport mechanism. Then, the dispensing head 221 is moved in a direction parallel to one surface of the stage 204 while being guided by the first guide portions 223 and second guide portion 224. The powdered material is dispensed onto one surface of the stage 204 from the dispensing head 221. As a result, the powdered material is tightly spread on one surface of the stage 204.

Furthermore, patent document 1 discloses a technique for moving a restrictive member in the form of a flat plate in a horizontal direction along the top surface of an additive manufacturing frame for creating a 3D object to transport a powdered material onto the top surface of a support stage and tightly spreading the powdered material on the top surface of the stage such that a constant thickness is achieved across the whole powdered material.

### Citation List

### Patent Documents

Patent document 1: JP-A-2001-152204

The additive manufacturing machine 200 shown in FIG. 20 has the problem that there is the danger that the transport pipe 226 interconnecting the powder reservoir 225 and the dispensing head 221 may be clogged with a powdered material and thus it may be impossible to stably dispense a powdered material onto the stage 204 from the dispensing head 221.

Furthermore, in the technique disclosed in patent document 1, the powdered material removed from the top surface of the stage is wasted. In addition, when powdered material is transported by the restrictive member, the material scatters within the processing chamber and adheres to the inner wall of the chamber, thus contaminating the interior of the chamber.

### SUMMARY OF THE INVENTION

In consideration of the foregoing problems, it would be desirable to provide an additive manufacturing machine capable of stably supplying a powdered material onto a support stage and suppressing the interior of a processing chamber from being contaminated with the powdered material.

According to the present invention, there is provided an additive manufacturing machine as set out in claim 1.

An additive manufacturing machine built in accordance with the teachings of the present invention for solving the foregoing problem has a support stage on which a powdered material for forming a 3D object stereolithographically is stacked as layers and a powder supply unit for spreading the powdered material tightly on the stage. The powder supply unit has a powder cartridge for accommodating the powdered material and dispensing the material onto the stage and at least one holding mechanism by which the powder cartridge is detachably held. The powder cartridge has a cartridge body for receiving an amount of the powdered material to be spread tightly as one or plural layers on the stage and a discharge port formed in the cartridge body to permit the powdered material to be discharged.

The additive manufacturing machine according to the present invention does not have any transport pipe that would normally be clogged up with powdered material. Therefore, a powdered material can be stably supplied onto the support stage. The powdered material for creating a 3D object is received in plural volumes within the cartridge body of the powder cartridge. This can suppress the interior of the processing chamber from being contaminated with the powdered material. It is possible to prevent waste of the powdered material.

### BRIEF DESCRIPTION OF THE DRAWINGS

FIG. 1 is a schematic vertical cross section of an additive manufacturing machine associated with a first embodiment of the present invention.
FIG. 2 is a schematic plan view of the additive manufacturing machine shown in FIG. 1.
FIG. 3 is a schematic plan view similar to FIG. 2, but showing a different state.
FIG. 4 is a cross-sectional view of main portions of a powder supply unit included in the additive manufacturing machine shown in FIG. 1.
FIG. 5 is a cross-sectional view showing a cartridge storage receptacle and its vicinities, the receptacle being included in the additive manufacturing machine shown in FIG. 1.
FIG. 6 is a schematic plan view of an additive manufacturing machine according to a second embodiment of the present invention.
FIG. 7 is a cross-sectional view of main portions of a powder supply unit included in the additive manufacturing machine shown in FIG. 6.
FIG. 8 is a front elevation of the powder supply unit shown in FIG. 7.
FIG. 9A is a plan view of a powder cartridge included in an additive manufacturing machine associated with a third embodiment of the invention.
FIG. 9B is a cross-sectional view of the powder cartridge shown in FIG. 9A.
FIG. 10 is a cross-sectional view of main portions of a powder supply unit included in the additive manufacturing machine associated with the third embodiment.
FIG. 11A is a plan view of a powder cartridge included in an additive manufacturing machine associated with a fourth embodiment of the invention.
FIG. 11B is a cross-sectional view of the powder cartridge shown in FIG. 11A.
FIG. 12 is an enlarged cross-sectional view of main portions of the powder cartridge shown in FIGS. 11A and 11B.
FIG. 13 is an explanatory view illustrating a state of grains of a powdered material discharged from the powder cartridge shown in FIG. 12.
FIG. 14A is a cross-sectional view of main portions of a powder supply unit included in an additive manufacturing machine associated with a fifth embodiment of the invention.
FIG. 14B is a side elevation of main portions of the powder supply unit shown in FIG. 14A.
FIG. 15 is a cross-sectional view of a powder supply unit and a cartridge exchanging mechanism included in the additive manufacturing machine associated with the fifth embodiment.
FIG. 16A is a cross-sectional view of an exchange cylinder of the cartridge exchanging mechanism shown in FIG. 15.
FIG. 16B is a cross-sectional view of the cartridge exchanging mechanism shown in FIGS. 15 and 16A, taken along a plane.
FIGS. 17A-17C are explanatory views illustrating an exchange operation of the cartridge exchanging mechanism shown in FIGS. 15, 16A, and 16B.
FIG. 18 is a cross-sectional view of the cartridge exchanging mechanism of the additive manufacturing machine shown in FIGS. 15, 16A, and 16B, illustrating an exchanging operation performed by the cartridge exchanging mechanism.
FIG. 19 is a cross-sectional view showing a modification of the additive manufacturing machine associated with the fifth embodiment.
FIG. 20 is a schematic cross-sectional view of a related art additive manufacturing machine.

### DESCRIPTION OF THE PREFERRED EMBODIMENTS

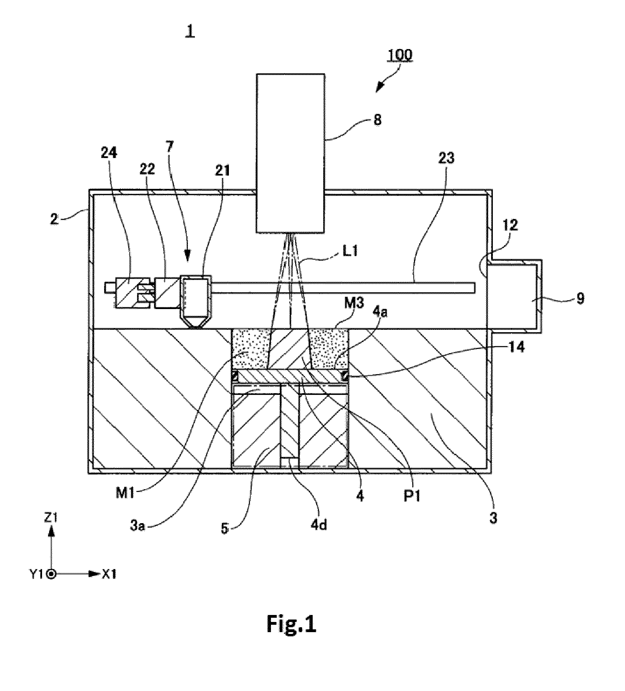

Embodiments of the additive manufacturing machine of the present invention are hereinafter described with reference to FIGS. 1-19. In the various figures, like components are indicated by like reference numerals. Although the various areas of the description are provided in the following order, the invention is not restricted to the following embodiments.
1. First Embodiment
   1-1. Configuration of Additive manufacturing Machine
   1-2. Operation of Additive manufacturing Machine
2. Second Embodiment
3. Third Embodiment
4. Fourth Embodiment
5. Fifth Embodiment
   5-1. Configuration of Additive manufacturing Machine
   5-2. Operation for Exchanging Powder Cartridge
   5-3. Modification

### 1. First Embodiment

### 1-1. Configuration of Additive manufacturing Machine

A first embodiment of the additive manufacturing machine of the present invention is first described by referring to FIG. 1, which schematically shows the machine, 1. The additive manufacturing machine 1 shown in FIG. 1 is used to create a 3D object by irradiating a powdered material consisting of a metal such as titanium, aluminum, or iron with an electron beam to melt the material and stacking layers of the powdered material solidified on top of each other.

The additive manufacturing machine 1 has a hollow processing chamber 2, an additive manufacturing frame 3, a support stage 4 in the form of a flat plate, a stage driving mechanism 5, a powder supply unit 7, an electron gun 8, and a cartridge housing receptacle 9. A direction that is parallel to one surface of the stage 4 is herein referred to as the first direction X1. A direction that is perpendicular to the first direction X1 and is parallel to one surface of the stage 4 is herein referred to as the second direction Y1. A direction that is perpendicular to one surface of the stage 4 is herein referred to as the third direction Z1.

A vacuum pump (not shown) is connected to the processing chamber 2. The interior of the processing chamber 2 is maintained in vacuum by evacuating the ambient inside the processing chamber 2 by the vacuum pump. The additive manufacturing frame 3, stage 4, stage driving mechanism 5, and powder supply unit 7 are mounted inside the processing chamber 2. The cartridge housing receptacle 9 is connected to one side of the processing chamber 2 as viewed in the first direction X1. The electron gun 8 is mounted on one side of the processing chamber 2 as viewed in the third direction Z1, while the additive manufacturing frame 3 is disposed on the other side of the processing chamber 2 as viewed in the third direction Z1.

The additive manufacturing frame 3 is provided with a pit 3a extending across the frame in the third direction Z1. The pit 3a forms an opening shaped like a quadrangular prism. A part of the outer periphery of the pit 3a in the additive manufacturing frame 3 is open to permit a completed 3D object P1 to be taken out.

The support stage 4 and stage driving mechanism 5 are disposed in the pit 3a formed in the additive manufacturing frame 3. A metal powder M1 for stereolithographically creating the 3D object is stacked as layers on the support stage 4 that is a powder supporting stage. A sliding member 14 having heat resistance and flexibility is mounted at a lateral end of the stage 4. The sliding member 14 is slidably in contact with the wall surface of the pit 3a. The pit 3a is partitioned by the stage 4 into two spaces which are spaced from each other in the third direction Z1, and these spaces are hermetically sealed by the sliding member 14.

A shaft portion 4d is mounted on the other surface of the stage 4 which faces away from the surface on which the metal powder M1 is stacked as layers. The shaft portion 4d protrudes from the other surface of the stage 4 toward the other side of the third direction Z1. The shaft portion 4d is connected to the stage driving mechanism 5 received in the pit 3a. The stage driving mechanism 5 drives the stage 4 via the shaft portion 4d in the third direction Z1. The stage driving mechanism 5 is a rack-and-pinion, ball screw, or the like.

The electron gun 8 is disposed opposite to one surface 4a of the stage 4 on one side of the processing chamber 2 as viewed in the third direction Z1. The electron gun 8 emits an electron beam L1 at the metal powder M1 in accordance with each two-dimensional shape of the slices obtained by slicing a previously prepared design object at intervals of ΔZ, the design object being represented by three-dimensional CAD (computer-aided design) data. As a result, a region of the metal powder M1 corresponding to the two-dimensional shape is molten.

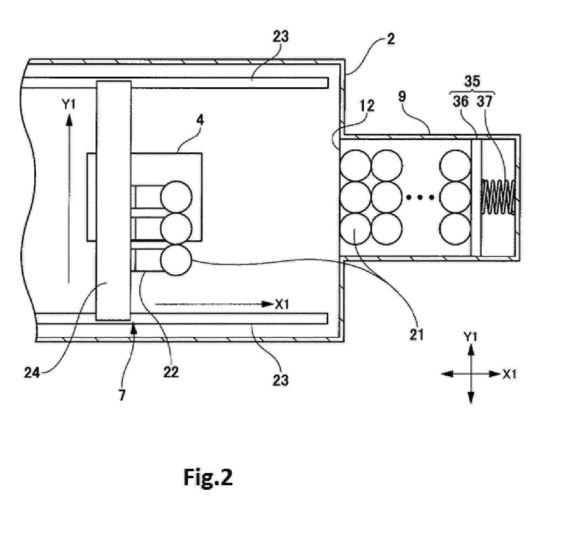

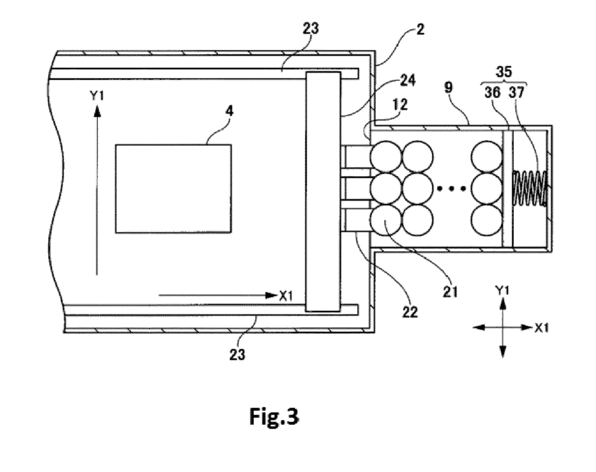

The powder supply unit 7 is spaced a given spacing from one side of the additive manufacturing frame 3 as viewed in the third direction Z1. The configuration of the powder supply unit 7 is next described in detail by referring to FIGS. 1-5. FIGS. 2 and 3 are schematic plan views of the additive manufacturing machine. As shown in FIGS. 2 and 3, the powder supply unit 7 has powder cartridges 21, holding mechanisms 22, a pair of first guide portions 23, and a second guide portion 24. The first guide portions 23 and second guide portion 24 together constitute one example of guide mechanism.

The first guide portions 23 of one pair are disposed on opposite sides of the stage 4 as viewed in the second direction Y1. The first guide portions 23 extend into the processing chamber 2 along the first direction X1. The second guide portion 24 is supported on the first guide portions 23 so as to be movable in the first direction X1.

The second guide portion 24 extends between the first guide portions 23 of one pair in the second direction Y1. The holding mechanisms 22 which are three in number are supported to the second guide portion 24 so as to be movable in the second direction Y1. The powder cartridges 21 are detachably held to the three holding mechanisms 22, respectively.

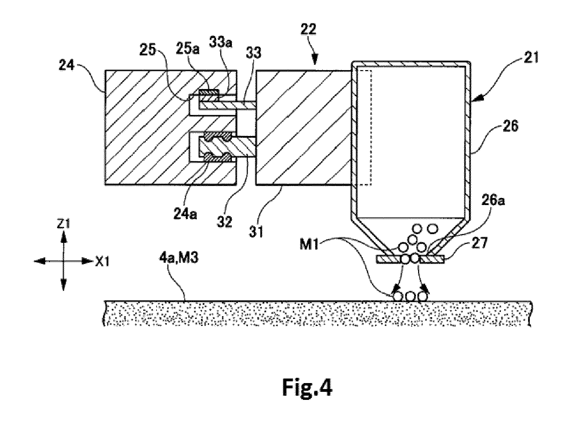

FIG. 4 is a cross-sectional views of main portions of the powder supply unit 7. As shown in FIG. 4, each of the powder cartridges 21 has a hollow cartridge body 26 for receiving the metal powder M1. An amount of metal powder M1 that will be spread tightly as one or more layers on the support stage 4 is received in the cartridge body 26.

The cartridge body 26 is provided with an exhaust port 26a permitting the metal powder M1 to be discharged toward the support stage 4. Each powder cartridge 21 has a shutter member 27 that covers the exhaust port 26a in the cartridge body 26 such that the port 26a can be opened and closed.

Each of the holding mechanisms 22 has a holding portion 31 by which a respective one of the powder cartridges 21 is detachably held, a rail engagement portion 32 making a sliding engagement with guide rails 24a mounted on the second guide portion 24, and a terminal connector 33. The terminal connector 33 has a cartridge connecting terminal 33a that is electrically connected with the shutter member 27 of the powder cartridge 21. The second guide portion 24 has a terminal receptor 25 into which the terminal connector 33 is inserted. The terminal receptor 25 has a guide terminal 25a that is electrically connected with the cartridge connecting terminal 33a mounted on the terminal connector 33.

In the present embodiment, the three powder cartridges 21 and the three holding mechanisms 22 are mounted to the second guide portion 24. The number of the powder cartridges 21 and holding mechanisms 22 is not restricted to three. They may be two or less or four or more in number. Different types of metal powder M1 may be received in the cartridge bodies 26 of the three powder cartridges 21. Alternatively, the same type of metal powder M1 may be received in the cartridge bodies 26.

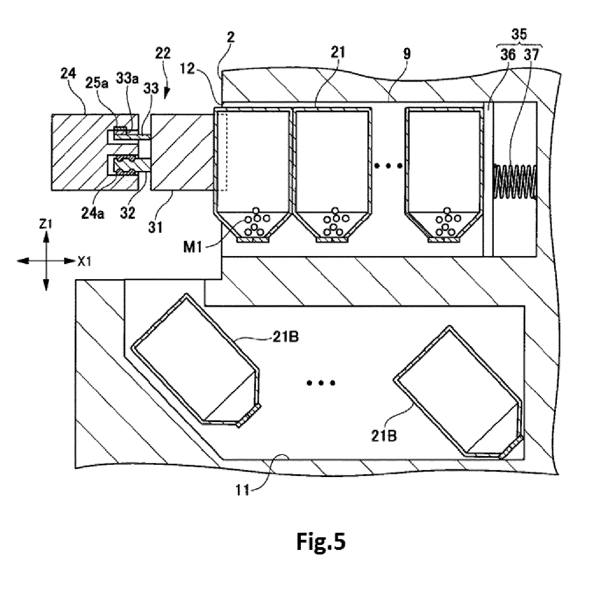

FIG. 5 is a cross-sectional view showing the cartridge housing receptacle 9 and its vicinities. As shown in FIG. 5, additional powder cartridges 21 loaded with the metal powder M1 are received in the cartridge housing receptacle 9. An exchange window 12 through which the powder cartridges are expelled is formed on the side of the cartridge housing receptacle 9 that is closer to the processing chamber 2. A pushing mechanism 35 is mounted on the side of the cartridge housing receptacle 9 that faces away from the exchange window 12.

The pushing mechanism 35 is composed of a pushing plate 36 abutting against the powder cartridges 21 and a coil spring 37 biasing the pushing plate 36 toward the exchange window 12. The pushing mechanism 35 biases the stored powder cartridges 21 toward the exchange window 12.

Stoppers (not shown) are mounted to the exchange window 12 of the cartridge housing receptacle 9 and bear against the powder cartridges 21 biased by the pushing mechanism 35 to restrict the cartridges 21 from being pushed out of the cartridge housing receptacle 9. When the powder cartridges 21 are exchanged, the stoppers are disengaged from the cartridges 21, and one cartridge 21 is handed over to the holding mechanisms 22.

The pushing mechanism 35 is not restricted to the aforementioned pushing plate 36 and coil spring 37. Alternatively, a motor, a piston, high-pressure gas, and various other mechanisms may be used.

A cartridge recovery receptacle 11 is mounted on the other side of the cartridge housing receptacle 9 as viewed in the third direction Z1. Each used powder cartridge 21B from which all the metal powder M1 has been expelled is discharged into the cartridge recovery receptacle 11.

The used powder cartridge 21B recovered into the cartridge recovery receptacle 11 can be reused by loading it with new metal powder M1. Furthermore, the metal powder M1 remaining in the used powder cartridge 21B can be reused.

### 1-2. Operation of Additive manufacturing Machine

The operation of the additive manufacturing machine 1 having the aforementioned configuration is next described by referring to FIGS. 1-5. FIG. 2 schematically shows main portions of the additive manufacturing machine 1, for illustrating its principal operations.

As shown in FIG. 1, the support stage 4 is moved into a position lower than the top surface of the additive manufacturing frame 3 by a distance ΔZ in the third direction Z1 by the stage driving mechanism 5. This distance ΔZ corresponds to the thickness of the layer of the metal powder M1 that will be spread tightly, the thickness being taken in the third direction Z1.

Then, the metal powder M1 is spread tightly over one surface of the support stage 4 up to the thickness ΔZ by the powder supply unit 7. In particular, as shown in FIG. 2, the holding mechanisms 22 and powder cartridges 21 are moved toward the other side of the stage 4 as viewed in the third direction Z1 along the first guide portions 23 and second guide portion 24. Then, as shown in FIG. 4, the shutter member 27 of one powder cartridge 21 is opened. As a result, the metal powder M1 received in the powder cartridge 21 is discharged onto one surface 4a of the stage 4 from the exhaust port 26a.

Then, as shown in FIG. 1, the electron gun 8 emits the electron beam L1 at the metal powder M1. Specifically, the electron gun 8 emits the electron beam L1 at the metal powder M1 in accordance with each two-dimensional shape of the slices obtained by slicing a previously prepared design object at intervals of ΔZ, the design object being represented by three-dimensional CAD (computer-aided design) data. As a result, a region of the metal powder M1 that corresponds to such two-dimensional shapes is molten.

When a given time for the material elapses, the molten metal powder M1 solidifies. After one layer of metal powder M1 melts and solidifies, the stage 4 is made to descend the distance ΔZ by the stage driving mechanism 5. The motion of the stage 4 in the third direction Z1 is accomplished by sliding motion of the sliding member 14 along the inner surface of the pit 3a formed in the additive manufacturing frame 3.

Then, the powder cartridge 21 is moved to one side of the stage 4 as viewed in the third direction Z1 again by the powder supply unit 7 to spread an amount of metal powder M1 corresponding to the distance ΔZ tightly on the layer formed immediately before, thus forming a second layer. A region of the metal powder M1 corresponding to a two-dimensional shape corresponding to the second layer is molten and solidified by the electron beam L1 emitted from the electron gun 8. This series of processing steps is carried out repeatedly to stack layers of the metal powder M1 molten and solidified on top of each other, thus building the 3D object P1. Consequently, the operation of the additive manufacturing machine 1 of the present embodiment is completed.

Each used powder cartridge 21B which has been completely emptied of the metal powder M1 is transported into the cartridge housing receptacle 9 and into the cartridge recovery receptacle 11 as shown in FIGS. 3 and 5. The used powder cartridges 21B are disengaged from the holding mechanisms 22 and recovered into the cartridge recovery receptacle 11.

Then, each holding mechanism 22 is inserted into the cartridge housing receptacle 9 through the exchange window 12 of the housing receptacle 9 and holds a new powder cartridge 21 loaded with the metal powder M1. When the powder cartridge 21 is transferred to the holding mechanism 22 from the cartridge housing receptacle 9, the remaining powder cartridge 21 stored in the cartridge housing receptacle 9 is biased toward the exchange window 12 by the pushing mechanism 35. This moves the powder cartridge 21 held by the holding mechanism 22 into a reception position in the cartridge housing receptacle 9, where the cartridge 21 waits.

In the additive manufacturing machine 1 according to the present embodiment, an amount or amounts of the metal powder M1 for achieving one or plural layers for creating the 3D object are received in one or more of the plural powder cartridges 21. Where amounts of the powder M1 corresponding to the plural layers are received, they are separately received. This dispenses with any transport pipe for transporting the metal powder M1; otherwise, the transport pipe would be clogged with the metal powder M1. Consequently, the metal powder M1 can be stably supplied onto the stage 4 at all times.

Since the metal powder M1 is received in the cartridge bodies 26 of the powder cartridges 21, contamination of the interior of the processing chamber 2 with the metal powder M1 can be suppressed. Different types of metal powder M1 can be received in the cartridge bodies 26 of the three powder cartridges 21, respectively. As a result, plural types of metal powder M1 can be placed in given positions independently. Alternatively, the plural types of metal powder M1 may be placed in the same layer.

The amount of metal powder M1 needed to create the 3D object P1 can be divided into smaller amounts and received in the plural powder cartridges 21 for managing purposes. In consequence, the metal powder M1 can be stored and managed easily. Furthermore, waste of the metal powder M1 can be prevented.

### 2. Second Embodiment

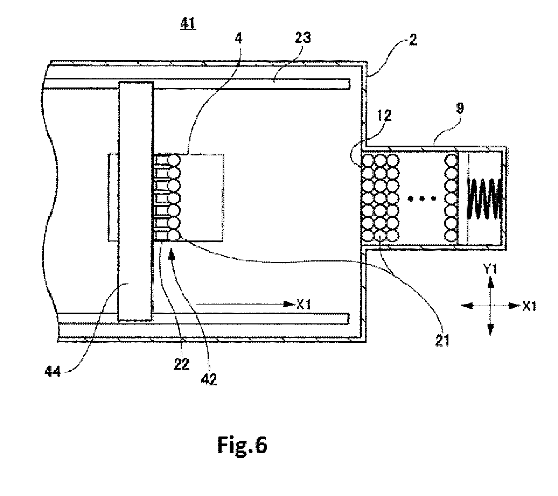

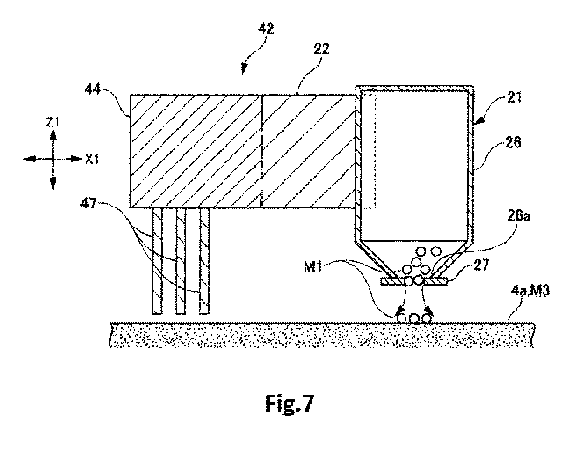

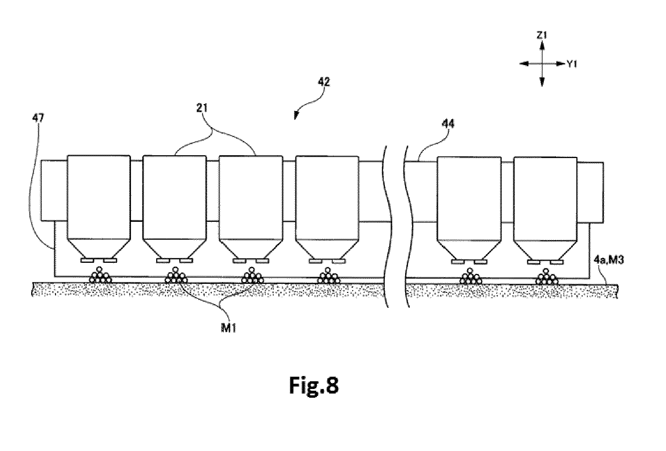

A second embodiment of the additive manufacturing machine of the present invention is next described by referring to FIGS. 6-8. FIG. 6 is a schematic plan view of an additive manufacturing machine, 41, associated with the second embodiment. FIG. 7 is a cross-sectional view of main portions of the additive manufacturing machine 41. FIG. 8 is a front elevation of the machine.

The additive manufacturing machine 41 associated with the second embodiment is similar to the additive manufacturing machine 1 associated with the first embodiment except for the configuration of the mechanism for moving the powder supply unit 42 and for the number of powder cartridges. Therefore, only the powder supply unit 42 is described here. Those components of the machine 41 which are identical to their respective counterparts of the additive manufacturing machine 1 associated with the first embodiment are indicated by the same reference numerals as in the above cited figures and a description thereof is omitted.

As shown in FIG. 6, the powder supply unit 42 has the first guide portions 23, a second guide portion 44 mounted on the first guide portions 23, the plurality of holding mechanisms 22 fixedly mounted to the second guide portion 44, and powder cartridges 21. The first and second guide portions 23, 44 constitute a guide mechanism.

The second guide portion 44 is supported to the first guide portions 23 so as to be movable in the first direction X1. The holding mechanisms 22 holding the powder cartridges 21 are secured on the second guide portion 44 without spaces therebetween along the scanning line on the stage 4 lying in the second direction Y1.

As shown in FIG. 7, the second guide portion 44 has homogenizing members 47 which extend from the second guide portion 44 while being spaced a given spacing either from one surface 4a of the stage 4 or from a surface (hereinafter referred to as the sample surface) M3 in the third direction Z1, the surface M3 being formed by the layer of metal powder M1 spread tightly on the stage 4. When the powder supply unit 42 supplies the metal powder M1 onto one surface 4a of the stage 4, the homogenizing members 47 are placed behind the second guide portion 44 in the direction of motion.

As shown in FIGS. 7 and 8, the homogenizing members 47 operate to destroy the top of a heap of the metal powder M1 discharged from each powder cartridge 21 and to make substantially uniform the thickness of the metal powder M1 discharged either onto one surface 4a of the stage 4 or onto the sample surface M3. Consequently, the metal powder M1 can be neatly spread to a given thickness on one surface 4a of the stage 4 or on the sample surface M3. In other respects, the additive manufacturing machine 41 is similar to the additive manufacturing machine 1 associated with the first embodiment and so a description of such similarities is omitted. The additive manufacturing machine 41 having the power supply unit 42 can yield the same advantageous effects as the additive manufacturing machine 1 associated with the first embodiment.

The powder supply unit 42 associated with the second embodiment makes it unnecessary to move the holding mechanisms 22 and the powder cartridges 21 in the second direction Y1. Hence, the moving mechanism can be made simpler in configuration than the powder supply unit 7 associated with the first embodiment. The powder supply unit 7 associated with the first embodiment may have the aforementioned homogenizing members 47.

### 3. Third Embodiment

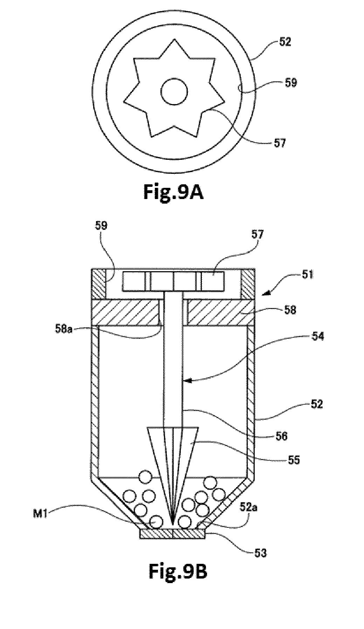

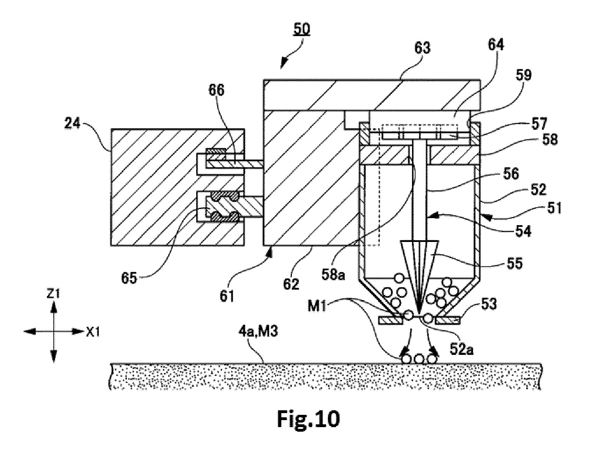

A third embodiment of the additive manufacturing machine of the present invention is next described by referring to FIGS. 9A, 9B, and 10, which schematically show the configuration of the powder supply unit of this machine.

This additive manufacturing machine associated with the third embodiment is similar to the additive manufacturing machine 1 associated with the first embodiment except for the configurations of a powder cartridge 51 of a powder supply unit 50 and of a holding mechanism 61. Therefore, only the powder cartridge 51 and holding mechanism 61 are described here. Those components of the machine associated with the third embodiment which are identical to their respective counterparts of the additive manufacturing machine 1 associated with the first embodiment are indicated by the same reference numerals as in the above cited figures and a description thereof is omitted.

As shown in FIGS. 9A and 9B, the powder cartridge 51 has a cartridge body 52, a shutter member 53 covering a discharge port 52a such that the port can be opened and closed, and an anti-clogging mechanism 54. The cartridge body 52 has an open surface at the end facing away from the discharge port 52a. A bearing portion 58 and a connector portion 59 are mounted to close off the opening of the cartridge body 52.

The bearing portion 58 is shaped like a flat plate and provided with a bearing hole 58a. The connector portion 59 that is cylindrical in shape is fixedly mounted to one surface of the bearing portion 58 which faces away from the cartridge body 52.

The anti-clogging mechanism 54 has rotary blades 55, a shaft 56, and a driven gear 57. The rotary blades 55 are secured to one axial end of the shaft 56. The rotary blades 55 are disposed opposite to the discharge port 52a within the cartridge body 52.

The rotary blades 55, each of which is shaped like a circular cone, are arranged radially. The front ends of the rotary blades 55 are located close to the discharge port 52a. The shaft 56 is rotatably supported in the bearing hole 58a of the bearing portion 58. One axial end of the shaft 56 is inserted in the cartridge body 52. The other axial end protrudes from the bearing portion 58 toward the connector portion 59. The driven gear 57 is secured to the other axial end of the shaft 56.

As shown in FIG. 10, the holding mechanism 61 has a holding portion 62, an arm portion 63, a driving portion 64, a rail engagement portion 65, and a terminal connector 66. The arm portion 63 has the driving portion 64 formed at one end of the holding portion 62 as viewed in the third direction Z1.

When the holding portion 62 holds the powder cartridge 51, the driving portion 64 is inserted into the connector portion 59 of the cartridge 51. The driving portion 64 has a driving gear that meshes with the driven gear 57. The driving portion 64 rotates the rotary blades 55 via the driven gear 57 and the shaft 56.

Where the diameter of the opening of the discharge port 52a of the cartridge body 52 is small, there is the danger that the discharge port 52a will be clogged with the metal powder M1 received in the cartridge body 52. In contrast, according to the powder supply unit 50 associated with the third embodiment, a solidified mass of the metal powder M1 staying around the discharge port 52a is destroyed by rotation of the rotary blades 55 disposed close to the discharge port 52a. Consequently, it is possible to prevent the metal powder M1 from solidifying near the discharge port 52a; otherwise, the port would be clogged up. The metal powder M1 can be stably discharged from the discharge port 52a.

In other respects, the additive manufacturing machine associated with the third embodiment is similar to the additive manufacturing machine 1 associated with the first embodiment. A description of such similarities is omitted. The additive manufacturing machine having the powder supply unit 50 described above can yield the same advantageous effects as the additive manufacturing machine 1 associated with the first embodiment.

In the above description of the third embodiment, clogging is prevented by rotating the rotary blades 55. The anti-clogging mechanism is not restricted to the foregoing configuration. One example of the anti-clogging mechanism is a vibratory mechanism for vibrating the cartridge body 52. Another example is accomplished by partitioning the interior of the cartridge body 52 and limiting the amount of the metal powder M1 discharged from the discharge port 52a using a restrictive member or any other mechanism.

### 4. Fourth Embodiment

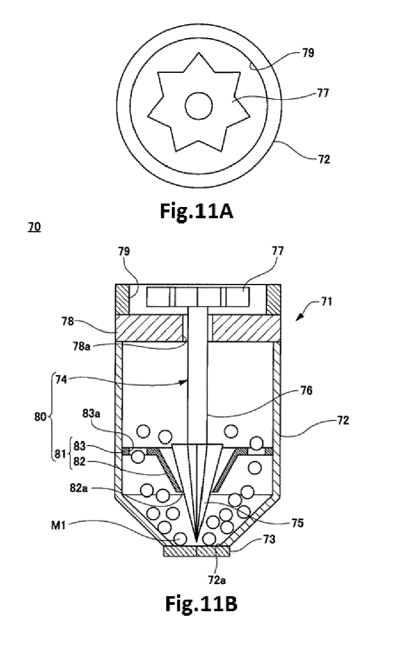

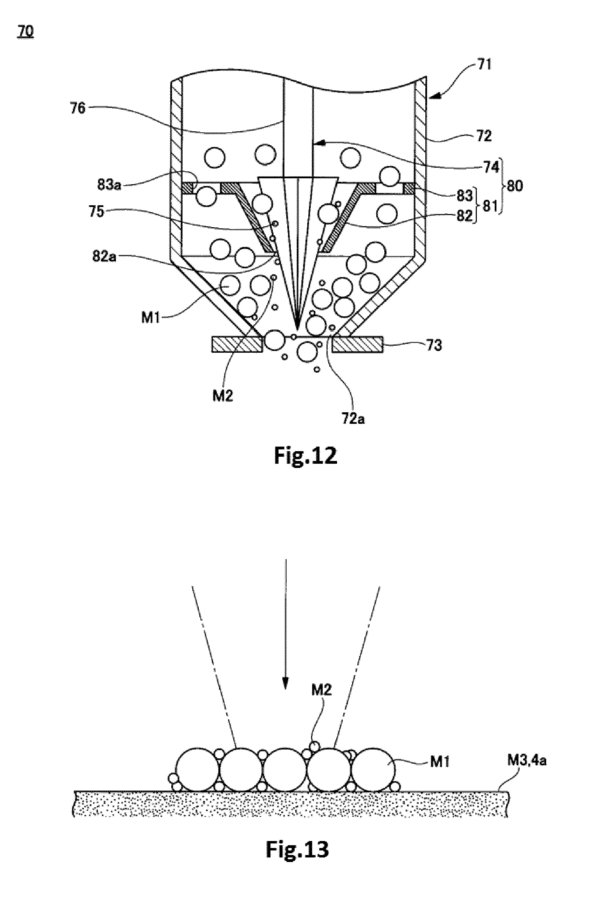

A fourth embodiment of the additive manufacturing machine of the present invention is next described by referring to FIGS. 11A,11B, 12, 13. FIGS. 11A, 11B, and 12 schematically show main portions of the powder supply unit of the additive manufacturing machine associated with the fourth embodiment.

The additive manufacturing machine associated with the fourth embodiment is similar to the additive manufacturing machine 1 associated with the first embodiment except for the configurations of a powder cartridge 71 of a powder supply unit 70 and of a holding mechanism. Therefore, only the powder cartridge 71 is described here. Those components of the additive manufacturing machine associated with the fourth embodiment which are identical to their respective counterparts of the additive manufacturing machine 1 associated with the first embodiment are indicated by the same reference numerals as in the above cited figures and a description thereof is omitted. The holding mechanism is identical in configuration to the holding mechanism 61 associated with the third embodiment and so a description of the holding mechanism is omitted.

As shown in FIGS. 11A and 11B, the powder cartridge 71 has a cartridge body 72, a shutter member 73 covering a discharge port 72a such that the port can be opened and closed, and a pulverizing mechanism 80. The cartridge body 72 has a bearing portion 78 and a connector portion 79 similarly to the cartridge body 52 associated with the third embodiment. The bearing portion 78 is provided with a bearing hole 78a.

The pulverizing member 80 has a rubbing member 74 and a rubbed member 81. The rubbing member 74 has a pulverizing portion 75, a shaft 76, and a driven gear 77. The pulverizing portion 75 is secured to axial one end of the shaft 76. The pulverizing portion 75 is shaped like a circular cone and has plural rubbing pieces arranged radially. The front end of the pulverizing portion 75 extends through the rubbed member 81 (described later) and is disposed close to the exhaust port 72a.

The shaft 76 is rotatably supported to the bearing hole 78a formed in the bearing portion 78. One axial end of the shaft 76 is inserted in the cartridge body 72. The other axial end protrudes from the bearing portion 78 toward the connector portion 79. The driven gear 77 is secured to the other axial end of the shaft 76.

The rubbed member 81 is disposed opposite to the discharge port 72a within the cartridge body 72. The rubbed member 81 has a rubbed portion 82 and a flange 83. The rubbed portion 82 is shaped like a hollow circular cone. The rubbed portion 82 is provided with a through-hole 82a at its apex. The front end of the pulverizing portion 75 extends through the through-hole 82a. The rubbed portion 82 is mounted inside the cartridge body 72 such that the through-hole 82a faces the discharge port 72a.

The flange 83 is mounted on the outer fringes of the rubbed portion 82 that is on the opposite side of the through-hole 82a. The flange 83 protrudes radially outwardly from the outer fringes of the rubbed portion 82, and is fixedly secured to the inner wall of the cartridge body 72. The flange 83 has insertion holes 83a through which the metal powder M1 passes. The openings of the holes 83a are set greater in diameter than the grains of the metal powder M1.

As shown in FIG. 12, a part of the metal powder M1 received in the cartridge body 72 passes through the insertion holes 83a in the flange 83. The remaining of the metal powder M1 enters the gap between the pulverizing portion 75 of the rubbing member 74 and the rubbed portion 82 of the rubbed member 81. When the rubbing member 74 is rotationally driven, the metal powder M1 interposed in the gap between the pulverizing portion 75 and the rubbed portion 82 is scraped. This produces granules of the metal powder M2 that are smaller in particle diameter than the grains of the metal powder M1 received in the cartridge body 72. As a result, the metal powder M1 and pulverized powder M2 having smaller particle diameters than the metal powder M1 are expelled from the discharge port 72a.

FIG. 13 shows the state of the metal powder M1 and pulverized powder M2 discharged from the powder cartridge 71. As shown in FIG. 13, the granules of the pulverized powder M2 discharged from the powder cartridge 71 enter between two adjacent grains of the metal powder M1. Consequently, the area of contact between any two adjacent grains of the metal powder M1 can be increased.

Generally, in order to prevent the metal powder M1 from being scattered about by the kinetic energy of the melting electron beam during a melting operation, a preheating operation is performed in the additive manufacturing machine before the metal powder M1 is molten. The preheating operation consists of melting the surface of the metal powder M1, thus weakening the bonding between the grains of the metal powder M1.

According to the additive manufacturing machine associated with the fourth embodiment, the granules of the pulverized powder M2 entering between the grains of the metal powder M1 are molten by preheating. This can enhance the degree of bonding between the grains of the metal powder M1 during the preheating. Since the pulverized powder M2 is molten with a smaller amount of heat than needed for the metal powder M1, the time taken to perform the preheating can be shortened. In addition, the melting can be done without performing the preheating.

Since the granules of the pulverized powder M2 enter between the gaps among the grains of the metal powder M1, the overall density of the metal powder M1 stacked as layers on one surface 4a of the stage 4 and on the sample surface M3 can be enhanced. As a result, the density of the built 3D object can be enhanced. Additionally, the accuracy and surface roughness of the 3D object can be improved. Furthermore, the pulverizing mechanism 80 acts also as an anti-clogging mechanism and assures that the metal powder M1 is discharged from the cartridge body 72 stably. In other respects, the additive manufacturing machine associated with the fourth embodiment is similar in configuration to the additive manufacturing machine 1 associated with the first embodiment and so a description of such similarities is omitted. The additive manufacturing machine having the powder supply unit 70 can yield the same advantageous effects as the additive manufacturing machine 1 associated with the first embodiment.

### 5. Fifth Embodiment

### 5-1. Configuration of Additive manufacturing Machine

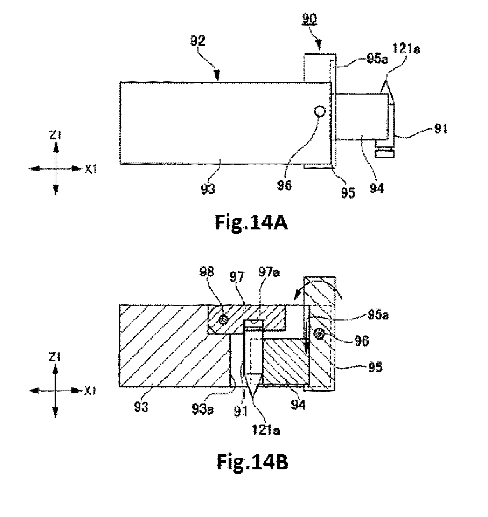

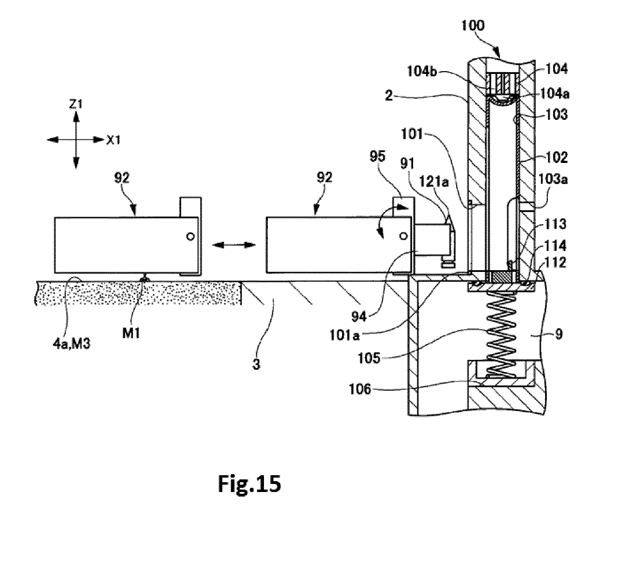

A fifth embodiment of the additive manufacturing machine of the present invention is described next by referring to FIGS. 14A, 14B, 15-18. FIGS. 14A and 14B show a powder supply unit. FIG. 15 is a cross-sectional view of main portions of the additive manufacturing machine.

The additive manufacturing machine associated with the fifth embodiment is similar to the additive manufacturing machine 1 associated with the first embodiment except for the configurations of the powder cartridge of the powder supply unit and of the holding mechanism and for the provision of a cartridge exchanging mechanism. Therefore, only the powder cartridge, holding mechanism, and cartridge exchanging mechanism are described here. Those components of the additive manufacturing machine associated with the fifth embodiment which are identical to their respective counterparts of the additive manufacturing machine 1 associated with the first embodiment are indicated by the same reference numerals as in the above cited figures and a description thereof is omitted.

As shown in FIGS. 14A and 14B, the powder supply unit, 90, has the powder cartridge, 91, the holding mechanism, 92, by which the powder cartridge 91 is detachably held, and a moving mechanism (not shown).

The holding mechanism 92 has a mechanism body 93, a holding portion 94 by which the powder cartridge 91 is detachably held, a rotary portion 95, and a hold-down member 97. The rotary portion 95 is rotatably mounted to the mechanism body 93 via a first rotating shaft 96. The rotary portion 95 is provided with a sliding groove 95a.

The holding portion 94 is slidably supported in the sliding groove 95a. When the rotary portion 95 rotates, the holding portion 94 slides in the sliding groove 95a and moves to the other side of the third direction Z1, i.e., vertically downwardly.

As shown in FIG. 14B, the mechanism body 93 has a mounting recess 93a in which the rotary portion 95, the holding portion 94, and the powder cartridge 91 are arranged, the cartridge 91 being held to the holding portion 94. When the powder cartridge 91 is exchanged as shown in FIG. 14A, the holding portion 94 and the powder cartridge 91 are placed outside the mounting recess 93a of the mechanism body 93. Where the metal powder M1 is discharged as shown in FIG. 14B, the rotary portion 95 rotates, and the holding portion 94 and powder cartridge 91 are placed in the mounting recess 93a.

The hold-down member 97 is rotatably mounted in the mounting recess 93a via a secondary rotating shaft 98. The hold-down member 97 is provided with a recess 97a in which the end of the powder cartridge 91 on the opposite side of a discharge port 121a is inserted, the cartridge 91 being placed in the mounting recess 93a. Consequently, the hold-down member 97 restricts motion of the powder cartridge 91 within the mounting recess 93a. As a result, when the metal powder M1 is discharged, it is possible to prevent the cartridge 91 from moving out of position.

As shown in FIG. 15, an exchange window 101 is formed in a wall surface that is located on one side of the processing chamber 2 as viewed in the first direction X1. A seal member 101a is mounted on the end of the exchange window 101 that is closer to the processing chamber 2. A cartridge exchanging mechanism 100 is positioned on one side of the exchange window 101 as viewed in the first direction X1. The exchange window 101 places the processing chamber 2 and the cartridge exchanging mechanism 100 in communication with each other.

The cartridge exchanging mechanism 100 is next described by referring to FIGS. 15, 16A, 16B, 17A-17C. As shown in FIG. 15, the cartridge exchanging mechanism 100 has an exchange cylinder 102, an exchange passage 103 in which the exchange cylinder 102 is movably positioned, a gas nozzle 104 ejecting high-pressure gas, and a biasing member 105 for biasing the exchange cylinder 102.

As shown in FIG. 15, the exchange passage 103 extends in the third direction Z1 on one side of the exchange window 101 as viewed in the first direction X1. The exchange passage 103 is shaped cylindrically and places the exchange window 101 and the cartridge housing receptacle 9 in communication with each other. An exhaust port 103a is formed in the exchange passage 103 at a position located opposite to the exchange window 101. A vacuum pump is connected to the exhaust port 103a via an open-close valve (not shown). The gas nozzle 104 is mounted on one side of the exchange passage 103 as viewed in the third direction Z1.

The gas nozzle 104 has an ejection port 104a jetting out high-pressure gas and a discharge port 104b. The high-pressure gas is ejected from the ejection port 104a of the gas nozzle 104 toward the exchange passage 103. The exchange cylinder 102 is mounted in the exchange passage 103 so as to be movable in the third direction Z1.

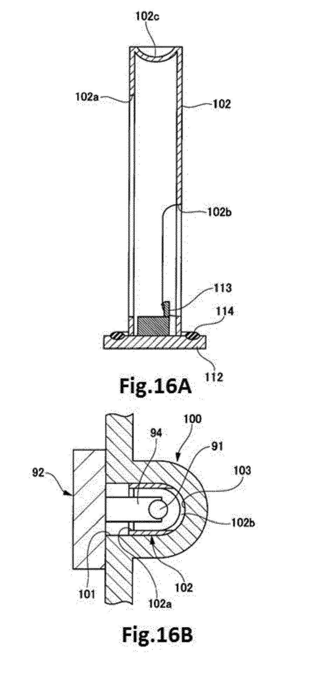

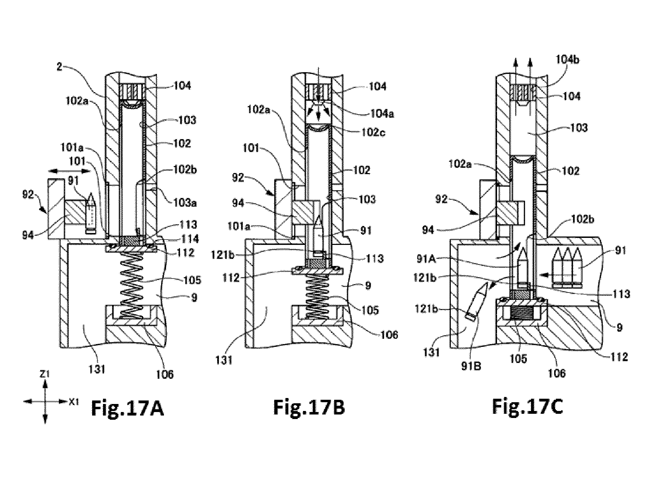

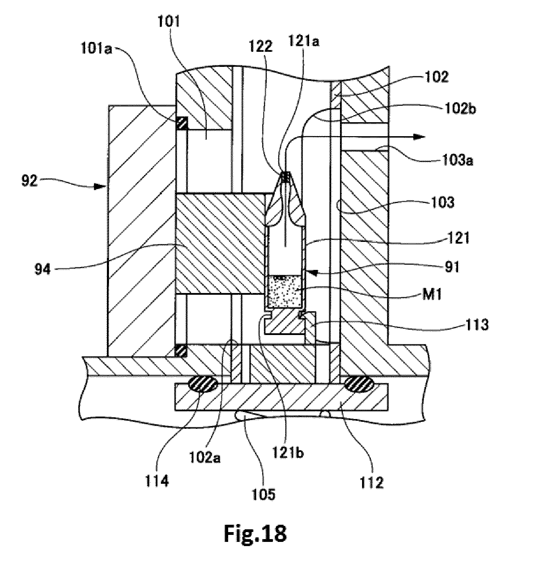

FIG. 16A is a cross-sectional view of the exchange cylinder 102. FIG. 16B is a cross-sectional view of the cartridge exchanging mechanism 100, taken from one side of the first direction X1. FIGS. 17A-17C and 18 illustrate an operation for exchanging the powder cartridge 91.

As shown in FIG. 16A, the exchange cylinder 102 is shaped cylindrically and has one axial end closed off. The other axial end is open. As shown in FIG. 16B, the exchange cylinder 102 is movably positioned within the exchange passage 103. As shown in FIG. 16A, an insertion window 102a and a receipt port 102b are formed in the side surface of the exchange cylinder 102.

The insertion window 102a is formed in the side surface of the exchange cylinder 102 that is closer to the exchange window 101 and extends continuously from end to end axially. As shown in FIG. 16B, the powder cartridge 91 and the holding portion 94 of the holding mechanism 92 are withdrawably inserted in the insertion window 102a.

As shown in FIG. 16A, the receipt port 102b formed in the side surface of the exchange cylinder 102 is located opposite to the insertion window 102a. Where the exchange cylinder 102 is disposed on one side of the third direction Z1 as shown in FIG. 15, the receipt port 102b faces the exhaust port 103a of the exchange passage 103. Where the exchange cylinder 102 is disposed on the other side of the third direction Z1 as shown in FIG. 17C, the receipt port 102b faces the opening of the cartridge housing receptacle 9.

As shown in FIG. 16A, a gas receiving recess 102c is formed at one axial end of the exchange cylinder 102. The gas receiving recess 102c extends from one axial end toward the other axial end of the exchange cylinder 102. High-pressure gas ejected from the ejection port 104a of the gas nozzle 104 is blown against the gas receiving recess 102c.

A bottom plate 112 in the form of a flat plate is securely mounted to the other axial end of the exchange cylinder 102, thus closing off the opening. The bottom plate 112 has an engagement portion 113 that engages an engagement groove 121b (FIG. 18) formed in the powder cartridge 91. The engagement portion 113 is secured to the bottom plate 112 and disposed at the other axial end of the exchange cylinder 102.

A cylinder sealing member 114 is mounted on one surface of the bottom plate 112. The cylinder sealing member 114 is made, for example, of an O-ring and mounted to surround the outer periphery of the exchange cylinder 102 on one surface of the bottom plate 112. As shown in FIGS. 17A and 18, when the exchange cylinder 102 is disposed on one side of the third direction Z1, the cylinder sealing member 114 is in intimate contact with the wall surface of the processing chamber 2 located on the other side of the third direction Z1. Consequently, the exchange passage 103 and the opening on the side of the cartridge housing receptacle 9 are closed off while interposing the bottom plate 112 therebetween. A space present on one side of the bottom plate 112 as viewed in the third direction Z1 is hermetically sealed.

As shown in FIGS. 15 and 17A, the biasing member 105 is mounted on the surface of the bottom plate 112 that faces away from the surface on which the exchange cylinder 102 is secured. The biasing member 105 is made, for example, of a coil spring having resilience. One end of the biasing member 105 is held to the bottom plate 112. The other end of the biasing member 105 is held to a spring receiving portion 106 which is located opposite to the bottom plate 112 and close to the opening of the cartridge housing receptacle 9. The biasing member 105 biases the exchange cylinder 102 via the bottom plate 112 to one side of the third direction Z1 at all times.

The spring receiving portion 106 is a recess extending from one surface to the other surface of the cartridge housing receptacle 9 as viewed in the third direction Z1. The cartridge housing receptacle 9 is positioned on one side of the spring receiving portion 106 as viewed in the first direction X1. A recovery passage 131 in communication with the cartridge recovery receptacle 11 (not shown in these figures) is formed on the other side of the spring receiving portion 106 as viewed in the first direction X1.

### 5-2. Operation for Exchanging Powder Cartridge

An operation for exchanging the powder cartridge 91 by the use of the cartridge exchanging mechanism 100 having the above-described configuration is next described by referring to FIGS. 15, 17A-17C, and 18. The position of the exchange cylinder 102 shown in FIG. 17A is herein referred to as the reception position, while the position of the exchange cylinder 102 shown in FIG. 17C is referred to as the exchange position.

As shown in FIGS. 15 and 17A, when the powder cartridge 91 is exchanged, the holding mechanism 92 first rotates the rotary portion 95 to make the discharge port 121a of the powder cartridge 91 face to one side of the third direction Z1. The holding mechanism 92 is moved to one side of the first direction X1 by a moving mechanism (not shown) and approaches the exchange window 101.

Where the exchange cylinder 102 is positioned in the exchange position as shown in FIG. 17A, a part of the other side of the insertion window 102a as viewed in the third direction Z1 faces the exchange window 101 and the receipt port 102b faces the exhaust port 103a. The cylinder sealing member 114 is in intimate contact with the wall surface of the processing chamber 2 on the other side of the third direction Z1. The bottom plate 112 closes off the opening of the exchange passage 103 that is on the other side of the third direction Z1. A vacuum pump (not shown) that is in operation at all times is connected with the exhaust port 103a via an open-close valve. In the state shown in FIG. 17A, the open-close valve connected with the exhaust port 103a is closed.

Then, as shown in FIG. 17B, the powder cartridge 91 and the holding portion 94 are inserted into the interior space of the exchange cylinder 102 by the holding mechanism 92. At this time, the opening of the exchange chamber 101 closer to the processing chamber 2 is closed off by the holding mechanism 92. Under this condition, the seal member 101a mounted on the exchange window 101 is in intimate contact with the holding mechanism 92. As a result, the exchange window 101 is closed, hermetically sealing the space inside of the processing chamber 2. The engagement portion 113 disposed in the exchange cylinder 102 engages the engagement groove 121b formed in the powder cartridge 91.

Then, high-pressure gas is ejected from the ejection port 104a of the gas nozzle 104. The high-pressure gas ejected from the ejection port 104a is blown against the gas receiving recess 102c formed in the exchange cylinder 102. This biases the exchange cylinder 102 toward the other side of the third direction Z1. As a result, the exchange cylinder 102 slides in the exchange passage 103 against the biasing force of the biasing member 105 into the exchange position shown in FIG. 17C. During this movement of the exchange cylinder 102 toward the other side of the third direction Z1, the engagement portion 113 is kept in engagement with the engagement groove 121b formed in the powder cartridge 91.

The insertion window 102a formed in the exchange cylinder 102 extends continuously from end to end axially of the exchange cylinder 102. This can prevent the holding portion 94 of the holding mechanism 92 inserted in the exchange cylinder 102 from interfering with the exchange cylinder 102. At this time, the interior of the exchange cylinder 102 is exposed to atmosphere. However, as described previously, the seal member 101a for the exchange window 101 is in intimate contact with the holding mechanism 92, thus hermetically sealing the space on the side of the processing chamber 2. In consequence, the interior of the processing chamber 2 can be maintained in vacuum.

When the exchange cylinder 102 has moved into the exchange position as shown in FIG. 17C, a new powder cartridge 91A is fed into the exchange cylinder 102 through the receipt port 102b from the cartridge housing receptacle 9. The used powder cartridge 91B received in the exchange cylinder 102 is pushed out toward the recovery passage 131 by the new powder cartridge 91A. This brings the engagement portion 113 out of engagement with the engagement groove 121b formed in the used powder cartridge 91B. As a result, the used powder cartridge 91B is expelled into the cartridge recovery receptacle (not shown) through both insertion window 102a and recovery passage 131.

Then, the gas inside the exchange passage 103 is evacuated from the discharge port 104b of the gas nozzle 104. At this time, the exhaust port 103a formed in the exchange passage 103 is closed off by the wall surface of the exchange cylinder 102. As a result, the exchange cylinder 102 is biased by the biasing member 105 and slides toward one side of the third direction Z1 through the exchange passage 103. This brings the engagement portion 113 into engagement with the engagement groove 121b formed in the new powder cartridge 91A. Thus, the new cartridge 91A is loaded in the exchange cylinder 102. Even under conditions shown in FIGS. 17B and 17C, the open-close valve connected to the exhaust port 103a is closed.

Then, as shown in FIG. 18, the exchange cylinder 102 moves into the reception position in the exchange passage 103. The open-close valve connected to the exhaust port 103a is then opened, and the gas inside the exchange cylinder 102 is evacuated from the exhaust port 103a using the vacuum pump (not shown). At this time, an open-close valve 122 that is one example of a shutter member mounted on the cartridge body 121 of the powder cartridge 91 is opened. Also, the discharge port 121a is opened. The powder cartridge 91 is loaded in the exchange cylinder 102 while the discharge port 91a faces one side of the third direction Z1 that is vertically upward. Therefore, inert gas loaded in the cartridge body 121 of the powder cartridge 91 together with the metal powder M1 can be evacuated quickly from the discharge port 121a.

When all of the inert gas loaded in the cartridge body 121 of the powder cartridge 91 is evacuated, the open-close valve 122 is actuated to close the discharge port 121a. Then, the powder cartridge 91 is held by the holding portion 94 of the holding mechanism 92. When the interior of the exchange cylinder 102 is evacuated for a given time by the vacuum pump, and the open-close valve connected to the exhaust port 103a is closed, the holding mechanism 92 is moved to the other side of the first direction X1. The holding portion 94 is pulled out of the insertion window 102a in the exchange cylinder 102 and out of the exchange window 101. Since the powder cartridge 91 moves substantially horizontally in the first direction X1, the engagement portion 113 comes out of the engagement groove 121b formed in the powder cartridge 91, whereby the engagement portion 113 disengages from the engagement groove 121b.

Then, as shown in FIG. 15, the holding mechanism 92 rotates the rotary portion 95 such that the discharge port 121a of the powder cartridge 91 faces to the other side of the third direction Z1, i.e., faces the additive manufacturing frame 3 and one surface 4a of the stage 4. Thus, the operation for exchanging the powder cartridge 91 ends.

In other respects, the additive manufacturing machine associated with the fifth embodiment is similar to the additive manufacturing machine 1 associated with the first embodiment and so a description of such similarities is omitted. The additive manufacturing machine having the powder supply unit 90 and the cartridge exchanging mechanism 100 can yield the same advantageous effects as the additive manufacturing machine 1 associated with the first embodiment.

Furthermore, with the additive manufacturing machine associated with the fifth embodiment, the powder cartridge 91 can be exchanged simply by reciprocating the exchange cylinder 102 once between the reception position and the exchange position in the third direction Z1. This can speed up the work for exchanging the powder cartridge 91.

One or plural layers of the metal powder M1 for creating a 3D object stereolithographically are received separately inside the cartridge body 121 of the powder cartridge 91. This can reduce the amount of metal powder that can be accommodated in the powder cartridge 91. This in turn can reduce the volume of the exchange cylinder 102. Hence, the time taken to evacuate the interior of the exchange cylinder 102 can be shortened.

Furthermore, in the above description of the embodiment, an exchange cylinder moving mechanism for moving the exchange cylinder 102 is the biasing member 105 including a high-pressure gas and a coil spring. The cylinder moving mechanism is not restricted to this example. The cylinder moving mechanism for moving the exchange cylinder 102 can be a combination of an electric motor and a gear, a linear motor, a cylinder, and any of various other moving mechanisms.

### 5-3. Modification

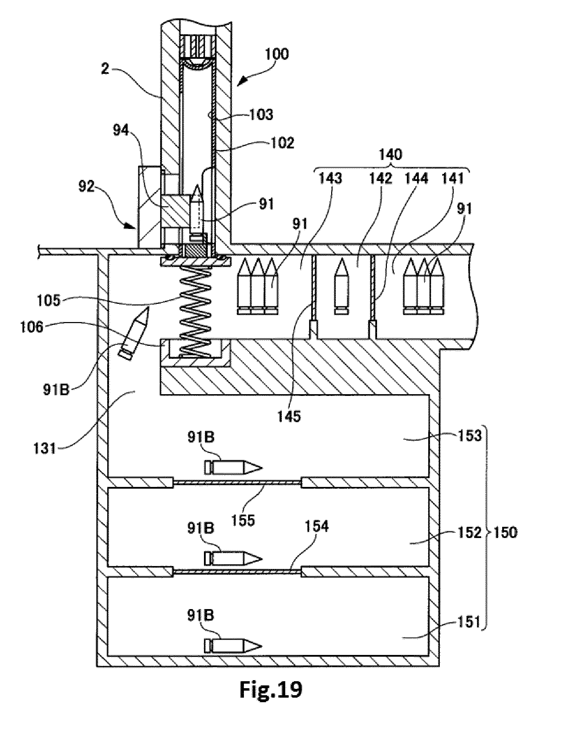

A modification of the additive manufacturing machine associated with the fifth embodiment is next described by referring to FIG. 19, which is a cross-sectional view of main portions of an additive manufacturing machine associated with the modification.

The additive manufacturing machine shown in FIG. 19 is similar to the additive manufacturing machine associated with the fifth embodiment except for the configurations of the cartridge storage receptacle and of the cartridge recovery receptacle. Therefore, only the cartridge storage receptacle and the cartridge recovery receptacle are described here. Those components of the additive manufacturing machine shown in FIG. 19 which are identical to their respective counterparts of the additive manufacturing machine associated with the fifth embodiment are indicated by the same reference numerals as in FIGS. 14A-18 and a description thereof is omitted.

As shown in FIG. 19, a cartridge storage receptacle 140 has a cartridge storage chamber 141, a storage intermediate chamber 142, and a storage waiting chamber 143. A first open-close door 144 is mounted between the cartridge storage chamber 141 and the storage intermediate chamber 142. A second open-close door 145 is mounted between the storage intermediate chamber 142 and the storage waiting chamber 143.

A plurality of unused, new powder cartridges 91 is received in the cartridge storage chamber 141. The ambient in the cartridge storage chamber 141 is set equal to the atmospheric pressure. A vacuum pump (not shown) is connected to the storage intermediate chamber 142. The interior of the storage intermediate chamber 142 is converted from atmospheric state to vacuum state by evacuating the storage intermediate chamber 142 by the vacuum pump.

Where the powder cartridges 91 are transported from the cartridge storage chamber 141 to the storage intermediate chamber 142, the first open-close door 144 and the second open-close door 145 are closed. Then, the vacuum pump is operated to convert the state of the storage intermediate chamber 142 from atmospheric state to vacuum state. Thus, the operation for evacuating the inert gas loaded in the powder cartridge 91 is completed. Then, the second open-close door 145 is opened. The powder cartridge 91 are transported from the storage intermediate chamber 142 to the storage waiting chamber 143.

The storage waiting chamber 143 is in communication with the exchange passage 103 of the cartridge exchanging mechanism 100. The storage waiting chamber 143 gives the exchange position where the exchange cylinder 102 is exchanged. This storage waiting chamber 143 is maintained in vacuum. Therefore, in this modification, for the powder cartridge 91 disposed in this exchange position, an operation for evacuating inert gas is already completed. Consequently, when the cartridge exchanging mechanism 100 performs an exchanging operation, it is not necessary to perform evacuation. For this reason, it is not necessary to form the exhaust port 103a in the exchange passage 103. Consequently, evacuation of the powder cartridge 91 can be dispensed with. This permits the cartridge exchanging mechanism 100 to perform an exchanging operation more quickly.

A cartridge recovery receptacle 150 has a cartridge recovery chamber 151, a recovery intermediate chamber 152, and a recovery waiting chamber 153. A first open-close door 154 is mounted between the cartridge recovery chamber 151 and the recovery intermediate chamber 152. A second open-close door 155 is mounted between the recovery intermediate chamber 152 and the recovery waiting chamber 153.

The recovery waiting chamber 153 is in communication with the recovery passage 131 and maintained in vacuum. A used powder cartridge 91B is transported into the recovery waiting chamber 153 through the recovery passage 131.

A vacuum pump (not shown) is connected to the recovery intermediate chamber 152. The state of the recovery intermediate chamber 152 is converted from atmospheric state to vacuum state. When the recovery intermediate chamber 152 is in a vacuum state, the second open-close door 155 is opened and the used powder cartridge 91B is transported from the recovery waiting chamber 153. The ambient inside the cartridge recovery chamber 151 is set equal to the atmospheric pressure. The first open-close door 154 is opened after the second open-close door 155 is closed. As a consequence, the state of the recovery waiting chamber 153 can be kept in vacuum state.

The used powder cartridge 91B is transported from the recovery intermediate chamber 152 into the cartridge recovery chamber 151, where the used powder cartridge 91B is recovered. Since it is not necessary to bring the cartridge recovery chamber 151 to a vacuum state, the used powder cartridge 91B can be recovered easily.

In other respects, the additive manufacturing machine associated with this modification is similar to the additive manufacturing machine 1 associated with the first embodiment and to the additive manufacturing machine associated with the fifth embodiment and, therefore, a description of such similarities is omitted. The additive manufacturing machine having the cartridge storage receptacle 140 and cartridge recovery receptacle 150 can yield the same advantageous effects as the additive manufacturing machine 1 associated with the first embodiment and the additive manufacturing machine associated with the fifth embodiment.

It is to be understood that the present invention is not restricted to the embodiments described above and shown in the accompanying drawings and that various modifications are possible without departing from the scope of the present invention set forth in the appended claims.

For example, in the above-described embodiments, powder of a metal such as titanium, aluminum, or iron is used as a powdered material. The present invention is not restricted to this. A resinous material may be used as the powdered material. Furthermore, an electron gun emitting an electron beam has been described as one example of melting mechanism that melts a powdered material. The invention is not restricted to this example. A laser emitting laser light may be used as the melting mechanism.

## Claims

1. An additive manufacturing machine comprising:
a support stage on which a powdered material for forming a three-dimensional object stereolithographically is stacked as layers; and
a powder supply unit for spreading the powdered material tightly on the stage; wherein the powder supply unit has
a powder cartridge for accommodating the powdered material and dispensing the powdered material onto the stage and,
at least one holding mechanism by which the powder cartridge is detachably held; and wherein the powder cartridge has
a cartridge body for receiving an amount of the powdered material to be spread tightly as one or plural layers on the stage, and
a discharge port formed in the cartridge body to permit the powdered material to be discharged.

2. An additive manufacturing machine as set forth in claim 1, wherein said powder supply unit has a moving mechanism for supporting said holding mechanism holding said powder cartridge above said support stage so as to be movable in a direction parallel to one surface of the stage on which said powdered material is spread tightly.

3. An additive manufacturing machine as set forth in any preceding claim, wherein said at least one holding mechanism of said powder supply unit is plural in number, and wherein said powder cartridge is detachably held to each of the holding mechanisms.

4. An additive manufacturing machine as set forth in any preceding claim, wherein said powder cartridge has an anti-clogging mechanism for preventing said discharge port from being clogged up with said powdered material accommodated in said cartridge body.

5. An additive manufacturing machine as set forth in claim 4, wherein said anti-clogging mechanism is made of rotary blades rotatably mounted in said cartridge body.

6. An additive manufacturing machine as set forth in any preceding claim, wherein said powder cartridge has a pulverizing mechanism which is disposed in said cartridge body and which is operative to scrape said powdered material consisting of grains to create granules of the powdered material which are smaller in particle diameter than the grains of the powdered material.

7. An additive manufacturing machine as set forth in any preceding claim, further comprising a cartridge storage receptacle for storing said powder cartridge.

8. An additive manufacturing machine as set forth in claim 7, further comprising a cartridge exchanging mechanism for exchanging a used powder cartridge with said powder cartridge stored in said cartridge storage receptacle.
